# EUROPEAN PATENT SPECIFICATION

(11) **EP 3 881 993 B1**
(45) Date of publication and mention of the grant of the patent: **31.08.2022**
(21) Application number: 20164598.3
(22) Date of filing: 20.03.2020
(51) Int. Cl.: B27K 7/00, A01N 3/00

(54) **METHOD FOR IMPROVING THE COMPLIANCE WITH QUALITY SPECIFICATIONS OF CORK PRODUCED FROM QUERCUS SUBER BY APPLYING KAOLINITE TO THE SURFACE OF THE EXPOSED INNER BARK OF A TREE, AFTER EXTRACTING THE CORK PLANK**
VERFAHREN ZUR VERBESSERUNG DER EINHALTUNG VON QUALITÄTSSPEZIFIKATIONEN VON KORK, HERGESTELLT AUS QUERCUS SUBER, DURCH AUFBRINGEN VON KAOLINIT AUF DIE OBERFLÄCHE DER FREIGELEGTEN INNEREN RINDE EINES BAUMS, NACH DEM EXTRAHIEREN DER KORKBOHLE
PROCÉDÉ D'AMÉLIORATION DE LA CONFORMITÉ AVEC DES SPÉCIFICATIONS DE QUALITÉ DE LIÈGE PRODUIT À PARTIR DE QUERCUS SUBER PAR APPLICATION DE KAOLINITE À LA SURFACE DE L'ÉCORCE INTERNE EXPOSÉE D'UN ARBRE, APRÈS EXTRACTION DU PLATEAU DE LIÈGE

(43) Date of publication of application: 22.09.2021
(73) Proprietor: C & D - Comércio e Indústria de Cortiça, Lda, 4536-909 Lourosa (PT)
(72) Inventor: CORREGGI, Corrado, 8670-230 Carrapateira (PT); LAI, Stefano, 09100 CAGLIARI (IT)
(74) Representative: Monteiro Alves, Inês

(56) References cited:
- WO-A1-2020/068915
- CN-B- 106 883 695
- SU-A1- 1 387 947
- J Valenzuela ET AL: "Making the best of the Scion Exchange: Part 1 What to bring to the Exchange", , 31 December 2011 (2011-12-31), XP055734040, Retrieved from the Internet: URL:http://www.crfg.org/chapters/golden_ga te/MakingtheBestFINAL4.pdf [retrieved on 2020-09-25]
- Anonymous: "Why Do They Whitewash a Tree? | Home Guides | SF Gate", , 31 December 2014 (2014-12-31), XP055734102, Retrieved from the Internet: URL:https://homeguides.sfgate.com/whitewas h-tree-63606.html [retrieved on 2020-09-25]
- Roland Jeschke: "Pflanzfehler und abiotische Schäden bei Jungbaumpflanzungen", , 31 December 2019 (2019-12-31), XP055734100, Retrieved from the Internet: URL:https://www.bund-mecklenburg-vorpommer n.de/fileadmin/mv/PDF/Alleen/Tagungsbeitra ege/2019/04_Roland_Jeschke_Pflanzfehler_un d_abiotische_Schaeden_an_Jungbaeumen.pdf [retrieved on 2020-09-25]
- Anonymous: "1 - Quais os principais sintomas/sinais? - ICNF", , 9 August 2018 (2018-08-09), XP055734445, Retrieved from the Internet: URL:http://www2.icnf.pt/portal/icnf/faqs/p rag-doe/platipo/1-quais-os-principais-sint omas-sinais [retrieved on 2020-09-28]

## Description

### TECHNICAL FIELD

The present invention refers to a method for improving the compliance with quality specifications of cork produced from *Quercus suber L,* wherein said method protects the *Quercus suber L.* from several biotic or abiotic factors that may affect the quality of produced cork and the proper growing of the tree itself.

### BACKGROUND ART

The cork is the outer covering layer of the trunk and branches of the Cork Oak (*Quercus suber L*.). The cork is a natural product that, due to its physical properties, mechanical and chemical, has been used for many centuries to various purposes. The applications given to cork are very broad and range from buoys for fishing, beehives and construction material, due to its thermal and acoustic insulation features. The cork has also been used as a material to make purses, bags and other accessories. Anyway, its most known application is for stoppers for wine bottles, which receives a very significant amount of the produced cork.

The Cork Oak, *Quercus suber L.*, is a tree of the Fagaceas family, which is mainly found in the European areas of the western Mediterranean and Atlantic Ocean. These trees are found in Mediterranean climate forests, tending to be rare in soils derived from limestones. It occurs in altitudes from 0 to 1200 m and can reach about 1500 m. The Cork Oak requires an average annual precipitation greater than 400 mm, but the best forests for its development have between 600 and 1000 mm per year. For an optimal development, it needs a proper humidity and the desirable temperatures in winter are above 0 °C and in higher than 18 °C in summer.

The cork oak forest thus constitutes an ecosystem of a natural forest, which has been transformed by multiple uses. The quality of cork becomes particularly important, considering that usually the trees are located on poor and unproductive soils.

On the other hand, in the last three decades, the action of biotic and abiotics agents have resulted in a rapid degradation of the cork oak forests, resulting in significant drop in productivity, both quantitatively and qualitatively.

The cork is a natural material. Therefore, it presents a marked variability in terms of quality. To commercially classify the cork, several levels of quality classes are proposed, for example: first class or higher quality; second class or good quality; third class or average quality; fourth, fifty and sixty classes; and finally waste class, in cases where defects, independent or associated on the same cork plank board, acquire a large intensity.

This illustrated classification, wherein the first four quality classes are known as best corks, is fundamentally dependent on several factors, such as the thickness of the cork, the porosity of the material, intrinsic conditions of the tree, and other biotic or abiotic extern agents.

The thickness of the cork, which is produced in a range from nine to ten years, is primarily dependent on the rate of growth derived from the meristematic activity. This, in turn, is dependent on external factors, related to climatic conditions, and on internal factors, such as the cell structure. The ambient temperature and the rate of precipitation also influence the growth rate of cork, wherein growth is especially favored in years when the previous winter was mild having a total rainfall over 500 mm. The rains occurring in late spring for a given year are also relevant to radial growth.

The pore is the cross section of the lenticular channels, which are present in the phellem layer, wherein this layer represents the produced cork. The porosity refers to the shape, dimensions and distribution of pores in cuts tangentially executed on the boards, perpendicular to the axis of the lenticular channels. The lenticular channels are fundamental for allowing the communication of living tree tissues with the external environment, but from a technological point of view they are a cork devaluing factor. The production of lenticular channels is related to the regeneration depth of the periderm, influencing the gas exchanges among internal tissues and atmosphere. On the other hand, it is believed that the production of lenticular channels is mainly influenced by genetic characteristics.

A first intrinsic condition of the tree may be influenced by relatively higher humidity levels, wherein the phellem cells lose part of their impermeability, decreasing the quality of stoppers, for instance.

A second intrinsic condition of the tree is related to a relatively rapid development of the trunk, wherein a quick radial growth of the secondary xylem, cambium, secondary phloem and phellem result in formation of deeper sulcus in the phellem layer. The undesired quick radial growth promotes tangential tensions on the phellem, leading to crack formations along the phellem.

A third intrinsic condition of the tree is related to an anomaly in the functioning of the phellem, often from lenticular channels. This anomaly results in formation of phellem cells having a different morphology, namely rounded cells spaced themselves, wherein the cellular walls do not contribute to filling the lenticular channels. Therefore, the cork obtained has a loose and powdery structure, which may result in a cork deemed to be useless.

A fourth intrinsic condition of the tree is related to a formation of tissue inclusions, derived from the secondary phloem, that project along the phellem layer, resulting in increasing of hardness, reducing of the elasticity and increasing of density of the phellem layer.

Concerning the biotic extern agents, it is specially worrying the damages caused by ants, for example the *Cremastogaster scutellarin*, which opens long and winding galleries along the phellem. Another pest is the beetle *Coroebus undatus* larva, which digs galleries between the phellogen and the phellem. Another example of pest is the insect *Platypus cylindrus*, which attack may result in death of the tree a few months after entering in the periderm and even in more inner layer of the wood, wherein the insect feeds itself by colonies of fungi. Moreover, some birds like the woodpecker *Dendrocopus minor*, perfurate the phellem layer when seeking for the beetle *Coroebus undatus* larva.

Other prejudicial biotic extern agents are some species of fungi, for example fungi of genus *Trichoderma*, which may be associated to 2,4,6-Tricloroanisole (TCA) formation. The TCA is a metabolite produced by several species of fungi. The TCA is detectable by human smell in ng / L - or parts per trillion (ppt), and not causes toxic effects on levels present in nature. Once formed, TCA is chemically stable and easily adsorbed by cork, which may impact the organoleptic features of the wine, namely related to sensory deviations that cause the mould smell/taste in wine.

Furthermore, other species of fungi promote formation of colored spots over and in the phellem, reducing the market value of the product. Other example of an undesirable fungi species is the *Hypoxylon mediterraneum*, which causes leaf loss and spots over the phellogen, wherein said spots lead to an adherence of the phellogen layer over the neighbor phellem layer, which difficult or even prevent cork removal. The *Hypoxylon mediterraneum* may contaminate the *Quercus suber* by means of the galleries, previously open by beetle larvas. Contaminations by fungi may lead to death of the tree, which is exemplified by the *Phytophtora cinnamomic* growing, started in the thin roots and propagated into several plant live tissues.

The abiotic extern agents refer mainly to climatic conditions, such as solar radiation in excess, higher temperatures and unbalanced humidity levels.

Therefore, there exists a great interest and need to develop a method that protects the *Quercus suber L.* from the several menaces that may affect the quality of produced cork and the proper growing of the tree itself. There also exists a necessity of developing a method that contributes to a better recovering of the plant after extracting the cork plank from the tree, namely avoiding a interruption of its physiologic activities.

### SUMMARY

The present invention is defined by the claims. Any subject-matter falling outside the scope of the claims is provided for information purposes only. In a first aspect, the present invention refers to a method for improving the compliance with quality specifications of cork produced from *Quercus suber L.* wherein the method comprises applying an effective amount of a composition comprising kaolinite to a surface of an inner bark of a tree, left exposed after extracting a cork plank from the tree.

### Technical Problem

After extracting a cork plank from *Quercus suber L.*, the tree is exposed to several biotic or abiotic menaces, that may affect the quality of the next produced cork by the tree and the proper growing of the tree itself. Therefore, there is a necessity of developing a method that contributes to a better recovering of the plant, after extracting the cork plank, and provides a better quality to the next cork produced.

### Solution to Problem

The present invention solves the problems of prior art by providing a method of applying an effective amount of a composition comprising kaolinite over the inner bark, making a protective coating of kaolinite over the subero-phellodermic exchange layer, wherein the application of kaolinite is performed after extracting the cork plank from the tree.

### Advantageous Effects of Invention

The method according to the present invention prompt a reduction in the porosity of the phellem layer (cork), increasing the quality of the produced cork. Moreover, the kaolinite coating makes a physical barrier against pests, including ants, fungi and beetle's larva. Once the contaminations by fungi is mitigated or avoided, the formation of haloanisoles, for example: TCA, tetrachloroanisoles, pentachloroanisoles, tribromoanisoles, and derivatives thereof is eliminated or significantly reduced, contributing to a better quality of the produced cork.

Furthermore, the refractory properties of the kaolinite coating contribute to reducing water losses after extracting the cork plank by reducing the porosity of periderm and by reducing the abiotic effects resulting from solar radiation and higher temperatures.

Regarding pore blocking by the kaolinite coating, the potential drawbacks for the physiologic metabolism of *Quercus suber L.* are not significant, once the kaolinite coated area usually refers to less than 20% of the tree's outer surface.

### BRIEF DESCRIPTION OF DRAWINGS

With the purpose of promoting an understanding of the principles in accordance with the embodiments of the present invention, reference will be made to the embodiments illustrated in the figures and to the language used to describe the same. Anyway, it must be understood that there is no intention of limiting the scope of the present invention to the contents of the figures
Figure 1 - illustrates a cross section of a *Quercus suber* stem after cork extracting without kaolinite application;
Figure 2 - illustrates the development of a protective bark layer two years later after cork extracting without kaolinite application;
Figure 3 - illustrates the development of a phellem layer (cork) ten years later after cork extracting without kaolinite application;
Figure 4 - illustrates a cross section of a *Quercus suber* stem after cork extracting with subsequent kaolinite application;
Figure 5 - illustrates the less development of a protective bark layer two years later after cork extracting with subsequent kaolinite application;
Figure 6 - illustrates the development of a phellem layer (cork) ten years later after cork extracting with subsequent kaolinite application;
Figure 7 - illustrates a block diagram of a method according to the invention;
Figure 8 - quality tests in the extracted cork after carrying out the method according to the invention; and
Figure 9 - quality tests in the extracted cork in trees selected as control ones.

### DESCRIPTION OF EMBODIMENTS

The cork, which is also known by its botanical term phellem layer (1), contains a layer of cells that have meristematic activity, wherein said activity is called phelllogenic or subero-phellodermic exchange, normally differentiated from of the first layer of cells underlying the epidermis. The phellem layer (1) comprises a unique kind of cells, which form several layers of unicellular thickness. The cork plank extracted to be industrially used is the phellem layer (1).

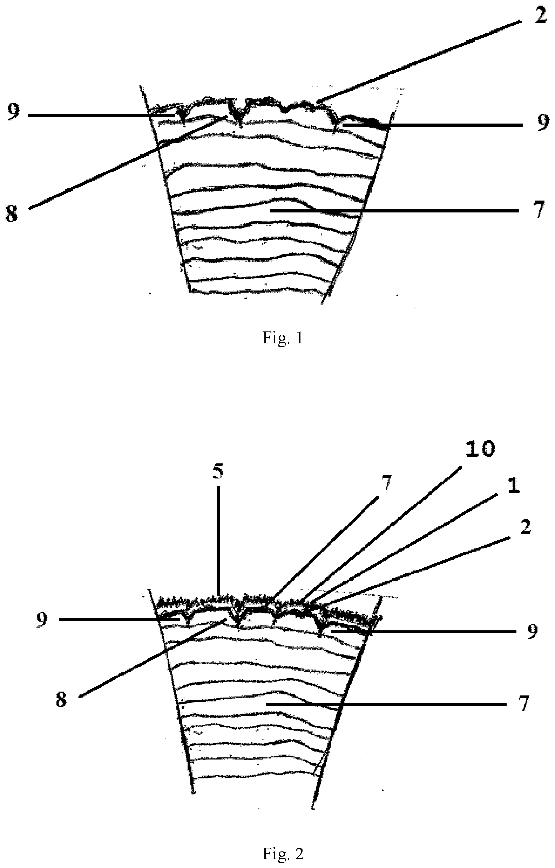

As it is shown in figure 1, after extracting the cork plank, the subero-phellodermic exchange layer (2) is left exposed. The active outer tissues of the tree are exposed biotic or abiotic extern agents, which together with intrinsic conditions of the tree may develop significant stresses, that might result in damage to tree development and to the quality of the next phellem layer produced.

As it is illustrated in figure 2, two years later after cork extracting, occurs the development of a protective bark layer (10) over a tiny phellem layer (1), wherein the phellem layer (1) develops itself over subero-phellodermic exchange layer (2).

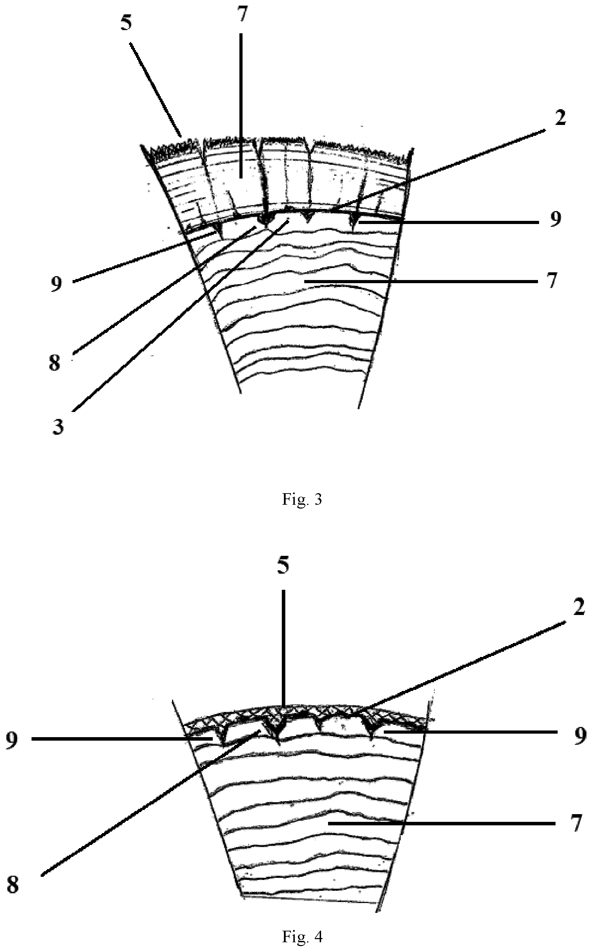

As it is illustrated in figure 3, ten years later after cork extracting and following successive periclinal divisions, the cells originate to the interior a subero-phellodermic exchange layer (2) and a layer of phelloderm (3). This process also results in a regular porosity of the periderm (4), which comprises the phellem layer (1), the subero-phellodermic exchange layer (2) and the phelloderm layer (3), and the deposition of lignin inside the conical channels (8). The figures 1 to 3 represent the development of cork without kaolinite application.

Surprisingly, the present invention solves the problems of prior art by providing a protective coating of kaolinite over the subero-phellodermic exchange layer (2), wherein this protective coating reduces or avoids the formation of the lenticular channels (9) and reduces the diameter of lenticels, conical channels (8) and lenticular channels (9). Therefore, these effects will prompt a reduction in the porosity of the phellem layer (1), increasing the quality of the produced cork. Another unexpected effect is related to the penetration of smaller particles of kaolinite into pores of the subero-phellodermic exchange layer (2), which blocks formation of pores and contributes to mitigate lignin accumulation in the subero-phellodermic exchange layer (2). Regarding pore blocking by the kaolinite coating, the potential drawbacks for the physiologic metabolism of *Quercus suber L.* are not significant, once the kaolinite coated area usually refers to less than 20% of the tree's outer surface.

As it is shown in figure 4, after extracting the cork plank, a kaolinite coating (5) is applied over the subero-phellodermic exchange layer (2) exposed. The kaolinite fills the pores, conical channels (8) and lenticular channels (9), besides linking itself with the meristematic tissues.

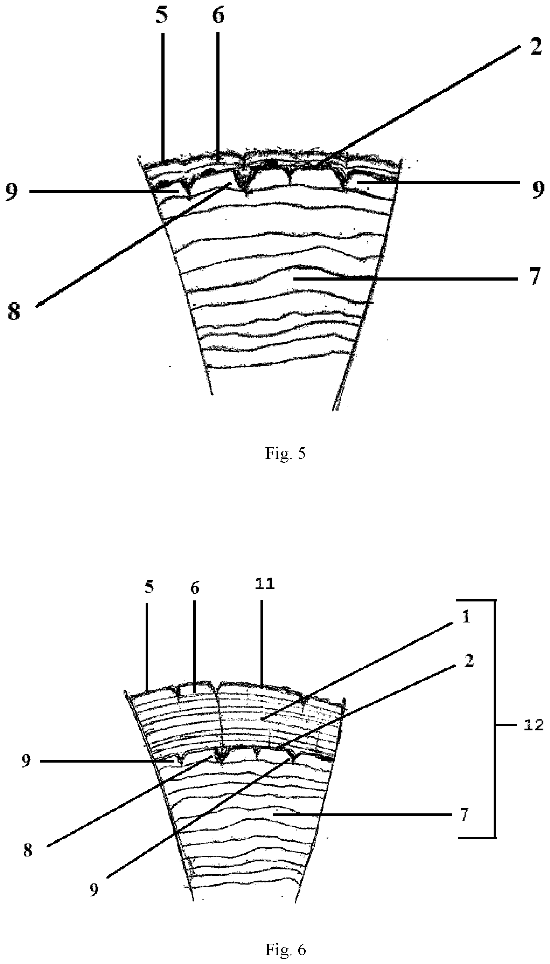

As it is illustrated in figure 5, two years later after cork extracting, the development of the protective bark layer (10) over a tiny phellem layer (1) is not remarkable. In the other hand, the formation of tissues related the subero-phellodermic exchange layer (2) is more intense. In the method according the invention, a kaolinite coating integrated with the bark (6) is formed, wherein said formation will be later detailed.

As it is illustrated in figure 6, ten years later after cork extracting, the phellem layer (1) is fully developed, under the kaolinite coating integrated with the bark (6), which is disposed over an outside area of the stem (11). The phellem layer (1) is in conditions to be extracted once more. The porosity is insignificant, even in the conical channels (8). The figures 4 to 6 represent the development of cork after a kaolinite application, following cork extracting. The phellem layer (1), the subero-phellodermic exchange layer (2) and the xylem (7) are comprised in the inside area of the stem (12).

Moreover, the kaolinite coating makes a physical barrier against pests, including ants, fungi, the beetle *Coroebus undatus* larva and the insect *Platypus cylindrus.* Once the contaminations by fungi may be mitigated or avoided, the formation of TCA is eliminated or significantly reduced, contributing to a better quality of the produced cork.

Furthermore, the refractory properties of the kaolinite coating contribute to reducing water losses after extracting the cork plank by reducing the porosity of periderm (4) and by reducing the abiotic effects resulting from solar radiation and higher temperatures.

The kaolinite is a type of clay comprised mostly of hydrated alumino-silicate with a chemical formula Al₂Si₂O₅(OH)₄. The particles of kaolinite have a platy structure, appearing as stacks of hexagonal platelets. The kaolinite is a dioctahedral clay mineral, wherein its unitary cell has the formula Al₄Si₄O₁₀(OH)₈. The chemical composition of the kaolinite, expressed by percentual amounts of the oxides is: 46.54% of SiO₂, 39.50% of Al₂O₃ and 13.96% of H₂O.

The unitary cell is distributed along octahedral planes (Al-O/AlOH) and tetrahedral planes (Si-O), wherein the adjacent planes are bond by hydrogen bonds among the groups SIOH, ALOH, OH and the permanently electrically charged sites. Therefore, the adjacent planes are asymmetrical and electrically neutrals, wherein anions OH- are positioned over a plane and O⁻² are positioned over the other one, resulting in a clay having hydrophilic features. The kaolinite has two types of stacking sequences of octahedral and tetrahedral planes. At the first stack, kaolinite is more crystallized, because its planes stack symmetrically on top of each other in the crystallographic axis c direction, with a slight shift related to axis a. In the second stack, its planes are stacked randomly, and the structure is considered poorly crystallized and presenting few isomorphic substitutions.

The kaolinite also comprises over its surface exchangeable cations, for example Na⁺, Ca⁺², Mg⁺², K⁺, H⁺ and NH₄⁺, and exchangeable anions, for example Cl⁻, SO₄⁻², PO₄⁻³ and NO₃⁻. The ions exchange process may be performed without disturb the basic structure of the clay. For this reason, the kaolinite alters its crystalline structure, binding to the living tissue of the subero-phellodermic exchange layer, without however changing its properties, or losing its identity.

When kaolinite is dissociated, it forms the complexes silanol (≡ SiOH) and aluminol (≡AlOH), which are responsible for some physical-chemical properties of the dissociated clay. The acidic and basic properties of kaolinite, for example, are attributed to protonation and deprotonation of the functional group aluminol (≡ Al-OH), presented at the edge of the mineral clay.

Concerning adsorption and absorption processes, the kaolinite comprises two absorption sites. The first absorption site occurs in the octahedral plane and on the side planes of the crystal, which can be positive (AlOH₂⁺) or negative (AlO⁻), according to the surrounding medium pH.

The second absorption site occurs on the surface silicon and does not depend on the pH value, being classified as a site of permanent electrical charge. Generally, the kaolinite surface is positively charged when the pH is lower than about 3.2 and negatively charged when the pH is upper than about 3.2.

However, when the kaolinites particles are crushed, many of the O-H bonds are disrupted, resulting in the presence of negatively charged atoms of oxygen on the outer surface. Once exposed to the external conditions, the O-H groups may be ionized, wherein this process is influenced by pH. The adsorption capacity is related to the zero charge point, which occurs at pH 4 in kaolinite. Below pH 4, the kaolinite adsorbs anions and above pH 4, adsorbs cations. Independent of the pH value, the interaction between kaolinite and cations/anions is so strong that its adsorption has characteristics of a chemical reaction, resulting in a chemisorption process.

The kaolinite has some solubility in water and may form a plastic slurry, wherein a significant number of particles having a spherical equivalent diameter equal or less than 2 micrometres can be found. The kaolinite has a relatively large superficial area, a higher chemical and mechanical stabilities and a higher adsorption capacity.

Several types of kaolinite may be used in the method according to the present invention, including the hydrous kaolinites; the delaminated kaolinites, which have a more platy structure than the hydrous kaolinites; the calcined kaolinites, which have an amorphous structure having trapped air inside the particles of kaolinite. Another type of kaolinite that may be employed in the method according to the present invention is the surface-treated kaolinite, which are either hydrous or calcined and have been treated with various surface-active agents, such as silanes, stearates, or polyacrylates to provide hydrophobicity. Further details of the several kinds of kaolinite may be consulted in Coatings Materials and Surface Coatings, edited by Arthur A. Tracton, CRC Press, 2006.

The prior art reveals applications of kaolinite on leaves surfaces of other species of plants, in order to protect the plant against pests, thermic stresses and chemical agents. These methods aim, for example, to increase the photosynthesis of the plant and the production of fruits. These techniques are based on the leaves of plants, because they are the surface of elaboration of glycerides, which constitutes the plant and contributes to energy production. The article Cadogan, B.L. and Scharbach, R.D. (Effects of a kaolin - based particle film on oviposition and feeding of gypsy moth (Lep., Lymantriidae) and forest tent caterpillar (Lep., Lasiocampidae) in the laboratory; in Journal of Applied Entomology 129(9 - 10):498 - 504 October 2005) reveals the application of kaolinite on leaves of the oak *Quercus rubrus L.* against gypsy moth *Lymantria dispar L.* and forest tent caterpillar *Malacosoma disstria Hubner.* However, no kaolinite treatment completely deterred gypsy moth feeding or oviposition. According to this prior art document, kaolinite particle film did not influence forest tent caterpillar feeding and there were insufficient data to evaluate the effect of kaolin on the species' oviposition

In fact, considering the features of *Quercus suber* leaves, a person skilled in the art would not expect success when applying a kaolinite coating on the leaves of the cork oak, because a leaf of this tree produces a serine that coats its faces, in order to provide protection against water loss, and to provide defense against extreme temperatures and some defense against biotic and abiotic agents. On the other hand, the existence of this type of hydrophobic serine prevents the adherence of kaolinite in the leaves.

Without willing to be bonded by any theory whatsoever, the strong interactions between kaolinite and cations/anions in chemisorption process plays an important role in the method for improving the compliance with quality specifications of cork produced from *Quercus suber L.* according to the present invention. The kaolinite prompts chemisorption interactions among the kaolinite planes and several compounds present in sap, for example phenols, polysaccharides, phosphates, hydrogens and water, wherein the sap is exposed after extracting the cork plank from the tree. The chemisorption interactions prompt a strong readjusting in the kaolinite crystalline structure, that results in visible morphological alterations of the kaolinite coating, which may occur after a few days after application. While chemisorption interactions take place, the kaolinite loses its original white color and acquires a brown color and vitreous structure, and the interactions may reach until more inner layers, for example the cambium layer (6). It is a surprisingly result, because the kaolinite does not alter its crystalline structure when said clay is applied over non-active vegetal tissues.

Therefore, the method for improving the compliance with quality specifications of cork produced from *Quercus suber L.*, according to the present invention, results in significant and unexpected benefits when the kaolinite coating is applied after a relatively small period of time after extracting the cork plank from the tree. The method according to the present invention presents outstanding advantages when the outer tissues exposed after the cork extraction step are active tissues. The use of a composition comprising kaolinite, according to the present invention, is performed by applying a composition comprising kaolinite to a surface of an inner bark of a tree, left exposed after extracting a cork plank from the tree. In the preferred embodiments of the method and use according to the present invention, the effective amount of the composition comprising kaolinite is applied over the exposed inner bark from 1 to 10 hours after extracting the cork plank, preferably from immediately to 4 hours after extracting the cork plank.

In the other hand, when kaolinite is applied over inert or non-active tissues, for example, a fully developed phellem layer or leaves, the chemisorption interactions do not happen and the kaolinite does not change its crystalline structure and the original structure of the octahedral and tetrahedral planes. This unreacted kaolinite coating may even be easily removed by rains, if it is not bonded to hydrophobic moieties, like in the surface treated kaolinites.

Illustrating a result of the remarkable decreasing in stress after extracting the cork plank from the tree, it is observed that the leaves are not deformed, when compared to a tree without the treatment according to the present invention. This fact demonstrate that a tree coated with kaolinite after the extraction step, wherein the exposed tissues still are active does not significantly suffer of losing water loss. As the physiological activity of the tree in maintained, it does not close the stomata present in leaves. Indeed, the medium size of new leaves created in a tree after a treatment according to the present invention is bigger than the medium size of new leaves of trees that do not receive the kaolinite coating.

When the method of the present invention is applied on trees submitted to the very first extracting the cork plank from the tree during its lifespan, it is observed a low level of porosity for the cork obtained after subsequent extractions, wherein each subsequent extraction may occur from nine to twelve years after the previous extraction step, according to the climate and soil conditions of a specific forest. Indeed, about 90% of the cork obtained after an extraction has a higher quality level in comparison with the previous cork extracted, when the method according to the present invention is employed. Similarly, after employing the method according to the present invention on older trees, the very next cork removed, usually nine to ten years after the previous cork extracting, has an unexpected higher level of quality, being observed, for example, from second class to fourth class quality levels, when it would be expected lower ones, as it is known from the experience with untreated trees.

The method of the present invention prevents formation of haloanisoles, for example: TCA, tetrachloroanisoles, pentachloroanisoles, tribromoanisoles, and derivatives thereof, acting on their precursors, namely fungi, and regularizing the pH after extraction of the cork plank. In the other hand, trees that were not submitted to a treatment with kaolinite shows formation of TCA, which may compromise the quality of the produced cork.

In the preferred embodiments of the method and use according to the present invention, the kaolinite is selected from the group consisting of hydrous kaolinite, delaminated kaolinite, calcined kaolinite, surface treated kaolinite, and mixtures thereof.

In the preferred embodiments of the method and use according to the present invention, the composition comprising kaolinite is an aqueous suspension. according to the invention the composition comprising kaolinite has kaolinite in an amount from 0.1 to 5 kg by liter (L) of water. Preferably, the kaolinite is in an amount from 1 to 3 kg/L of water, more preferably 2 kg/L.

In the preferred embodiments of the method and use, the kaolinite employed in the method according to the invention may have a granulometry comprised in a range from an average size of particles of about 1 micrometre to an average size of particles of about 1 millimeter.

In the preferred embodiments according to the present invention, the method for improving the compliance with quality specifications of cork produced from *Quercus suber L.* comprises the steps:
a) Inserting a first cut in the cork plank;
b) Separating the cork plank from the inner bark;
c) Inserting a second cut in the cork plank in order to define the size of the cork plank to be removed from the tree;
d) Extracting the cork plank from the tree, leaving exposed the inner bark; and
e) Applying an effective amount of the composition comprising kaolinite over the exposed inner bark.

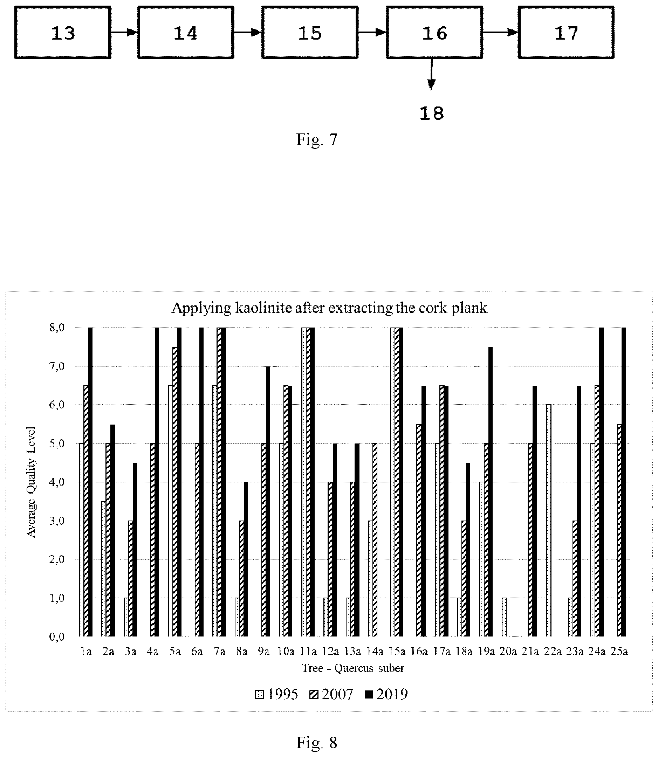

As illustrated in figure 7, in a preferred embodiment according to the invention, the method for improving the compliance with quality specifications of cork produced from *Quercus suber L.* comprises a step of inserting a first cut in the cork plank (13), wherein the first cut is a vertical cut along the trunk tree in the more preferred embodiments. The first cut may be made by means of proper tools, for example an axe. The next step is a step of separating the cork plank from the inner bark (14), which may be carried out by introducing an axe between the phellem layer (1) and the subero-phellodermic exchange layer (2), and by performing a lever in order to detach the two said layers. The following step comprises a step of inserting a second cut in the cork plank in order to define the size of the cork plank to be removed from the tree (15). In the more preferred embodiments, the second cut is a horizontal cut along the trunk tree. In order to obtain the cork plank (18), it is carried out a step of extracting the cork plank from the tree, leaving exposed the inner bark. In the more preferred embodiments, the cork plank (18) is manually extracted. Finally, it is performed a step of applying an effective amount of the composition comprising kaolinite over the inner bark (17). In the more preferred embodiments, the composition comprising kaolinite is applied from immediately to 10 hours after extracting the cork plank, preferably from immediately to 4 hours after extracting the cork plank.

In the more preferred embodiments, the composition comprising kaolinite is applied by means of brushes, for example a brush used to apply paint on a surface, or by means of paint rollers. Alternatively, as it will be fully understood by a person skilled in the art, the composition comprising kaolinite may be applied by means of spraying devices, for example airless paint sprayers, pneumatic paint sprayers, spray guns, and high volume, low pressure sprayers.

### Examples

The method according to the present invention was tested from 1995 to 2019 on 25 trees comprised in forests from North of Italy. A first extraction of a cork plank from the tree was carried out in 1995, wherein it was applied an effective amount of the composition comprising kaolinite over the exposed inner bark. A second extraction of a cork plank from the tree was carried out in 2007, followed by another application of a composition comprising kaolinite over the exposed inner bark. A third extraction of a cork plank from the tree was carried out in 2019, and the composition comprising kaolinite was applied again over the exposed inner bark.

For each cork plank extracted, a quality evaluation of the cork plank was performed. Once the cork plank is a natural material having inherent heterogenous features, usually a cork plank has different quality levels. The quality rate was assessed according the quality level rating of table 1, wherein a numerical value was attributed to each qualitative quality level.

**Table 1**

| Quality Level | Rating |
|---|---|
| Virgin | NA |
| Second extraction | NA |
| Superior | 8 |
| 1st | 7 |
| 2nd | 6 |
| 3rd | 5 |
| 4th | 4 |
| 5th | 3 |
| 6th | 2 |
| Waste | 1 |
| No extraction | NA |

In table 2 are shown results for 25 trees, located in a forest of North Italy, which were submitted to method according to the present invention. In table 3 are shown results for a control group having 25 trees comprised in in the same forest, which were not submitted to any kind of treatment carried out after extracting their cork planks.

When a cork plank is labelled as "Virgin", it means that the cork plank has been the first one extracted from a tree lifespan. When a cork plank is labelled as "Second extraction", it means that the cork plank has been the second one extracted from a tree during its lifespan. The Virgin cork and the second extraction cork usually do not have a proper quality level for making stoppers, for example, and these materials are usually milled or granulated, in order to have some utility as a raw material. Therefore, according to our evaluation methodology, the "virgin" cork and the "second extraction cork" did not receive an applicable rating to measure its quality level. Furthermore, when it is considered before harvesting that a cork produced by a tree does not meet the basic quality levels or the amount of produced cork is significantly low, the harvesting is not performed. So, there is no extraction in said situations and the rating is also not applicable.

The results for the trees submitted to method according to the present invention show a tendency of increasing the quality of the produced cork from the first harvesting evaluated in 1995 to the one carried out in 2019. Moreover, unexpectedly, for the six trees submitted for their first extraction of cork in 1995, the second extraction carried out in 2007 provided a cork having a rated quality level, according to table 1. Another remarkable observed result is the low percentage, less than 7%, of times wherein a harvesting was not done.

**Table 2**

| Tree number | Harvesting Year 1995 | Harvesting Year 2007 | Harvesting Year 2019 |
|---|---|---|---|
| | Quality rating | Quality rating | Quality rating |
| 1a | 2nd/4th | 1st/2nd | Superior |
| 2a | 3rd/6th | 2nd/4th | 1st/4th |
| 3a | Waste | 4th/6th | 2nd/6th |
| 4a | Virgin | 2nd/3rd | Superior |
| 5a | 1st/2nd | Superior/1st | Superior |
| 6a | Virgin | 2nd/4th | Superior |
| 7a | 1st/2nd | Superior | Superior |
| 8a | Waste | 4th/6th | 2nd/6th |
| 9a | Virgin | 2nd/4th | 1st |
| 10a | 2nd/4th | 1st/2nd | 1st/2nd |
| 11a | Superior | Superior | Superior |
| 12a | Waste | 3rd/5th | 2nd/°4th |
| 13a | Waste | 3rd/5th | 2nd/4th |
| 14a | 4th/6th | 2nd/4th | No extraction |
| 15a | Superior | Superior | Superior |
| 16a | Virgin | 2nd/3rd | 1st/2nd |
| 17a | 2nd/4th | 1st/2nd | 1st/2nd |
| 18a | Waste | 4th/6th | 3rd/4th |
| 19a | 2nd/6th | 2nd/4th | Superior/1st |
| 20a | Waste | No extraction | No extraction |
| 21a | Virgin | 2nd/4th | 1st/2nd |
| 22a | 1st/3rd | No extraction | No extraction |
| 23a | Waste | 4th/6th | 1st/2nd |
| 24a | 2nd/4th | 1st/2nd | Superior |
| 25a | Virgin | 2nd/3rd | Superior |

The results of table 3 for the trees comprised in the control group show a tendency of decreasing the quality of the produced cork from the first harvesting evaluated in 1995 to the one carried out in 2019. Moreover, for the six trees submitted for their first extraction of cork in 1995, the second extraction carried out in 2007 provided an expected "second extraction" cork, wherein the quality level is not properly rated. Concerning the "no extractions", the harvesting was not done in 17% of times, leading to significantly breakings in the outcomes of the production.

**Table 3**

| Tree number | Harvesting Year 1995 | Harvesting Year 2007 | Harvesting Year 2019 |
|---|---|---|---|
| | Quality rating | Quality rating | Quality rating |
| 1c | 2nd/4th | 2nd/6th | Waste |
| 2c | 2nd/6th | 2nd/4th | 2nd/6th |
| 3c | Waste | Waste | Waste |
| 4c | Virgin | Second extraction | 2nd/6th |
| 5c | 2nd/6th | 2nd/4th | No extraction |
| 6c | Virgin | Second extraction | 2nd/4th |
| 7c | 1st/2nd | Superior | 1st/2nd |
| 8c | 2nd/6th | 4th/6th | Waste |
| 9c | Virgin | 2nd/4th | 1st |
| 10c | 2nd/4th | 1st/2nd | No extraction |
| 11c | Superior | Superior | 1st/2nd |
| 12c | Waste | Waste | 4th/6th |
| 13c | Waste | 4th/6th | Waste |
| 14c | 4th/6th | No extraction | No extraction |
| 15c | 2nd/5th | 3rd/5th | 2nd/6th |
| 16c | Virgin | Second extraction | 2nd/4th |
| 17c | 2nd/4th | No extraction | No extraction |
| 18c | Waste | Waste | No extraction |
| 19c | Virgin | Second extraction | 3rd/6th |
| 20c | Waste | No extraction | No extraction |
| 21c | Virgin | Second extraction | 1st/3rd |
| 22c | 1st/3rd | No extraction | No extraction |
| 23c | Waste | Waste | No extraction |
| 24c | 2nd/4th | 1st/2nd | No extraction |
| 25c | Virgin | Second extraction | 2nd/4th |

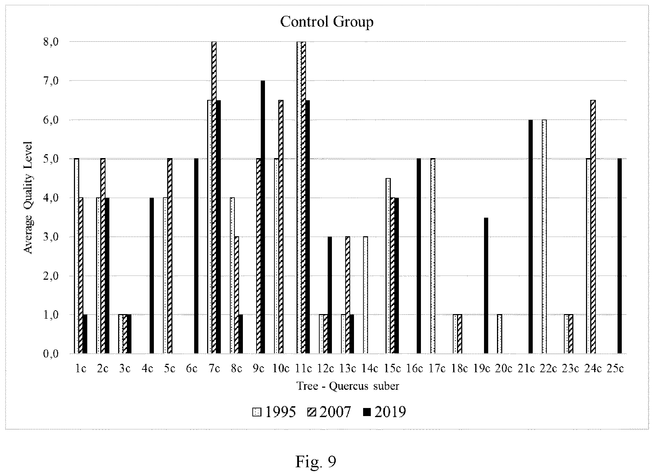

In order to provide another way of presenting the results of tables 2 and 3, an average value for the quality level was calculated for every tree after each cork extraction. In the figure 8 are shown the average values in respect to quality evaluations ran in the extracted cork after carrying out the method according to the invention. Following the same methodology to assess the quality level, in figure 9 are presented the quality evaluations in the extracted cork in trees comprised in the control group.

The results of figure 8 shown a clear tendency on increasing the quality levels of cork extracted from trees that were submitted to the method according to the present invention. Indeed, the quality level rating of the cork extracted has increased or maintained the quality level from 1995 to 2019 for 92% of the trees upon which the kaolinite was applied. Concerning the control group, after evaluating the results of figure 9, the quality of the cork has increased from 2007 to 2019 only for 8% of the trees evaluated. Moreover, for 36% of the trees belonging to control group, it was not possible to extract plank in 2019. Other remarkable effect is that the TCA was not identified in the samples of cork extracted from treated trees. In the other hand, this undesirable compound was identified in some samples of the control group.

As used in this description, the expressions "about" and "approximately" refer to a range in values of roughly 10% the specified number.

As used in this description, the expression. "substantially" means that the real value is within an interval of about 10% of the desired value, variable or related limit, particularly within about 5% of the desired value, variable or related limit or particularly within about 1% of the desired value, variable or related limit.

The subject matter described above is provided as an illustration of the present invention and must not be interpreted to limit it. The terminology used with the purpose of describing specific embodiments, according to the present invention, must not be interpreted to limit the invention. As used in this description, the definite and indefinite articles, in their singular form, aim to include in the interpretation the plural forms, unless the context of the description explicitly indicates the contrary. It will be understood that the expressions "comprise" and "include", when used in this description, specify the presence of the characteristics, the elements, the components, the steps and the related operations, but do not exclude the possibility of other characteristics, elements, components, steps and operations from being also contemplated.

### Industrial Applicability

The cork industry from *Quercus suber L* starts with a sustainable way of cork production. The method for improving the compliance with quality specifications of cork produced from *Quercus suber L,* according to the present invention, contributes to increasing of the quality and the amount of cork produced along the harvesting phase of this material. On the other hand, there have never been detected haloanisoles, for example: TCA, tetrachloroanisoles, pentachloroanisoles, tribromoanisoles, and derivatives thereof in treated trees according to present invention.

### Reference Signs List

- 1.: a phellem layer (cork);
- 2.: a subero-phellodermic exchange layer;
- 3.: a phelloderm layer;
- 4.: a periderm;
- 5.: a kaolinite coating;
- 6.: a kaolinite coating integrated with the bark;
- 7.: a xylem;
- 8.: a conical channel;
- 9.: a lenticular channel;
- 10.: a bark layer;
- 11.: an outside area of the stem;
- 12.: an inside area of the stem;
- 13.: a step of inserting a first cut in the cork plank;
- 14.: a step of separating the cork plank from the inner bark;
- 15.: a step of inserting a second cut in the cork plank in order to define the size of the cork plank to be removed from the tree;
- 16.: a step of extracting the cork plank from the tree, leaving exposed the inner bark; and
- 17.: a step of applying an effective amount of the composition comprising kaolinite over the inner bark;
- 18.: a cork plank.

### Citation List

### Patent Literature

### Non Patent Literature

Coatings Materials and Surface Coatings, edited by Arthur A. Tracton, CRC Press, 2006; Cadogan, B.L. and Scharbach, R.D. (Effects of a kaolin - based particle film on oviposition and feeding of gypsy moth (Lep., Lymantriidae) and forest tent caterpillar (Lep., Lasiocampidae) in the laboratory; in Journal of Applied Entomology 129(9 - 10):498 - 504 October 2005);

## Claims

1. A method for improving the compliance with quality specifications of cork produced from *Quercus suber L.* **characterized by** applying a composition comprising kaolinite to a surface of an inner bark of a tree, left exposed after extracting a cork plank from the tree, wherein the composition comprising kaolinite has kaolinite in an amount from 0.1 to 5 kg by liter (L) of water.

2. The method for improving the compliance with quality specifications of cork produced from *Quercus suber L.* according to claim 1, **characterized by** the fact that the kaolinite is selected from the group consisting of hydrous kaolinite, delaminated kaolinite, calcined kaolinite, surface treated kaolinite, and mixtures thereof.

3. The method for improving the compliance with quality specifications of cork produced from *Quercus suber L.* according to any one of claims 1 and 2, **characterized by** the fact that the composition comprising kaolinite is an aqueous suspension.

4. The method for improving the compliance with quality specifications of cork produced from *Quercus suber L.* according to any one of claims 1 to 3, **characterized by** comprising the steps:
a) Inserting a first cut in the cork plank;
b) Separating the cork plank from the inner bark;
c) Inserting a second cut in the cork plank in order to define the size of the cork plank to be removed from the tree;
d) Extracting the cork plank from the tree, leaving exposed the inner bark; and
e) Applying the composition comprising kaolinite over the exposed inner bark.

5. The method for improving the compliance with quality specifications of cork produced from *Quercus suber L.* according to claim 4, **characterized by** the fact that the composition comprising kaolinite is applied over the exposed inner bark from immediately to 10 hours after extracting the cork plank.

6. The method for improving the compliance with quality specifications of cork produced from *Quercus suber L.* according to anyone of claims 1 to 5, **characterized by** the fact that the said method eliminates the formation of haloanisoles, for example 2,4,6-Trichloroanisole, tetrachloroanisoles, pentachloroanisoles, tribromoanisoles, and derivatives thereof.

## Patentansprüche

1. Eine Methode, um die Einhaltung der Qualitätsanforderungen an aus *Quercus suber L hergestelltem* Kork zu verbessern, **dadurch gekennzeichnet, dass** eine aus Kaolinit bestehende Zusammensetzung auf die Oberfläche der inneren Rinde eines Baumes aufgebracht wird, die nach dem Entfernen einer Korkplanke aus dem Baum freigelegt wurde, worin die Kaolinit enthaltende Zusammensetzung einen Kaolinitanteil von 0,1 bis 5 kg pro Liter (L) Wasser aufweist.

2. Die Methode zur Verbesserung der Einhaltung der Qualitätsanforderungen an aus *Quercus suber L.* hergestelltem Kork gemäß Anspruch 1, **dadurch gekennzeichnet, dass** der Kaolinit aus der Gruppe ausgewählt wird, die aus wasserhaltigem Kaolinit, delaminiertem Kaolinit, kalziniertem Kaolinit, oberflächenbehandeltem Kaolinit und Mischungen davon besteht.

3. Die Methode zur Verbesserung der Einhaltung der Qualitätsanforderungen an aus *Quercus suber L.* hergestelltem Kork gemäß einem der Ansprüche 1 und 2, **dadurch gekennzeichnet, dass** die Kaolinit enthaltende Zusammensetzung eine wässrige Suspension ist.

4. Die Methode zur Verbesserung der Einhaltung der Qualitätsanforderungen an aus *Quercus suber L.* hergestelltem Kork gemäß einem der Ansprüche 1 bis 3, **dadurch gekennzeichnet, dass** sie folgende Schritte umfasst:
a) Einfügen eines ersten Schnitts in die Korkplanke;
b) Ablösung der Korkplanke von der inneren Rinde;
c) Einfügen eines zweiten Schnitts in die Korkplanke, um die Größe der Korkplanke zu bestimmen, die vom Baum entfernt werden sollte;
d) Entfernen der Korkplanke aus dem Baum, um die innere Rinde freizulegen und
e) Aufbringen der Zusammensetzung aus Kaolinit auf die freiliegende innere Rinde.

5. Die Methode zur Verbesserung der Einhaltung der Qualitätsanforderungen an aus *Quercus suber L.* hergestelltem Kork gemäß Anspruch 4, **dadurch gekennzeichnet, dass** die Kaolinit enthaltende Zusammensetzung sofort oder bis zu 10 Stunden nach der Entnahme der Korkplanke auf die freiliegende Innenrinde aufgetragen wird.

6. Die Methode zur Verbesserung der Einhaltung der Qualitätsanforderungen an aus *Quercus suber L.* hergestelltem Kork gemäß einem der Ansprüche 1 bis 5, **dadurch gekennzeichnet, dass** die genannte Methode die Bildung von Haloanisolen, wie beispielsweise 2,4,6-Trichloranisol, Tetrachloranisolen, Pentachloranisolen, Tribromanisolen und deren Derivate verhindert.

## Revendications

1. Procédé pour l'amélioration de la conformité aux spécifications de qualité du liège produit à partir de *Quercus suber L.* **caractérisé par** l'application d'une composition comprenant de la kaolinite sur une surface d'une écorce interne d'un arbre, laissée exposée après l'extraction d'une planche de liège de l'arbre, dans lequel la composition comprenant de la kaolinite comporte de la kaolinite en une quantité à partir de 0,1 jusqu'à 5 kg par litre (L) d'eau.

2. Procédé pour l'amélioration de la conformité aux spécifications de qualité du liège produit à partir de *Quercus suber L.* selon la revendication 1, **caractérisé par le fait que** la kaolinite est sélectionnée parmi le groupe constitué de kaolinite hydratée, de kaolinite délaminée, de kaolinite calcinée, de kaolinite traitée en surface, et de leurs mélanges.

3. Procédé pour l'amélioration de la conformité aux spécifications de qualité du liège produit à partir de *Quercus suber L.* selon l'une quelconque des revendications 1 et 2, **caractérisé par le fait que** la composition comprenant de la kaolinite est une suspension aqueuse.

4. Procédé pour l'amélioration de la conformité aux spécifications de qualité du liège produit à partir de *Quercus suber L.* selon l'une quelconque des revendications 1 à 3, **caractérisé en ce qu'il** comprend les étapes suivantes :
a) Insertion d'une première découpe dans la planche de liège ;
b) Séparation de la planche de liège provenant de l'écorce interne ;
c) Insertion d'une deuxième découpe dans la planche de liège de façon à définir la taille de la planche de liège à retirer de l'arbre ;
d) Extraction de la planche de liège provenant de l'arbre, laissant l'écorce interne exposée ; et
e) Application de la composition comprenant de la kaolinite sur l'écorce interne exposée.

5. Procédé pour l'amélioration de la conformité aux spécifications de qualité du liège produit à partir de *Quercus suber L.* selon la revendication 4, **caractérisé par le fait que** la composition comprenant de la kaolinite est appliquée sur la partie d'écorce exposée à partir d'immédiatement jusqu'à 10 heures après l'extraction de la planche de liège.

6. Procédé pour l'amélioration de la conformité aux spécifications de qualité du liège produit à partir de *Quercus suber L.* selon l'une quelconque des revendications 1 à 5, **caractérisé par le fait que** ledit procédé élimine la formation d'haloanisoles, par exemple 2,4,6-trichloroanisole, tétrachloroanisole, pentachloroanisole, tribromoanisole et leurs dérivés.
